# EUROPEAN PATENT SPECIFICATION

(11) **EP 0 438 040 B1**
(45) Date of publication and mention of the grant of the patent: **15.06.1994**
(21) Application number: 90850407.9
(22) Date of filing: 17.12.1990
(51) Int. Cl.: F16K 1/22, F16K 47/04, F16K 5/06

(54) **Device relating to a butterfly valve**
Vorrichtung für ein Klappenventil
Dispositif pour vanne papillon

(30) Priority: 19.01.1990 SE 9000185
(43) Date of publication of application: 24.07.1991
(73) Proprietor: Aktiebolaget Somas Ventiler, S-661 00 Säffle (SE)
(72) Inventor: Wangeby, Percy M., S-662 00 Amal (SE); Hubertson, Folke, S-661 00 Säffle (SE)
(74) Representative: Hynell, Magnus

(56) References cited:
- EP-A- 0 043 193
- EP-A- 0 101 323
- EP-A- 0 218 787
- DE-A- 2 045 639
- DE-A- 2 359 717
- FR-A- 2 244 951
- FR-A- 2 506 420
- FR-A- 2 616 874

## Description

### TECHNICAL FIELD

This invention concerns a device in a butterfly valve comprising a valve housing with an inlet on the pressure side of the valve, an outlet and a flow passage therebetween, a valve body with a rotatable closure member in the form of a butterfly valve disc with a front side facing the pressure side of the valve and a rear side turned from the pressure side in the closed position of the valve disc, a valve seat in the valve housing, a rotatable shaft for turning the butterfly valve disc about an axis of rotation between an open position, in which the butterfly valve disc does not close the flow passage between the inlet and the outlet, and a closed position, in which the butterfly valve disc is blocking all flow through said passage by sealing contact in a plane between a circumferential sealing surface on the butterfly valve disc and a sealing surface on the valve seat, said device comprising attenuating means provided on the butterfly valve disc within that space having the shape of a part of a sphere which is generated by the contour of the butterfly valve disc when the butterfly disc is turned about the axis of rotation by the rotatable shaft, said attenuating means comprising a first attenuating means is provided on the rear side of the butterfly valve disc but essentially only on that half of the disc which is turned towards the pressure side as the valve is being opened from the closed position, defining a first space having the substantial shape of a spherical wedge, or a part of a spherical wedge, said wedge having its edge on the axis of rotation of the butterfly valve disc and having an edge angle which is at least 30° but not more than 120°;
and a second attenuating means is provided on the front side of the butterfly valve disc but essentially only on that half of the disc which is turned from the pressure side as the valve is being opened from the closed position, defining a second space which also has the substantial shape of a spherical wedge or part of a spherical wedge having its edge on the axis of rotation of the butterfly valve disc and having an edge angle which is at least 30° but not more than 120°.

### BACKGROUND ART

GB-A-1 479 888, which describes a device according to the preamble of claim 1, discloses a closure member, which comprises a substantially disc-shaped portion mounted on a valve pin for rotation about an axis. Integral with disc-shaped portion and depending from semi-circular portion thereof are two flow modifying portions, each portion being in the form of a quarter of a spherical shell. Each flow modifying portion has one or more openings which may be in the form of slots or in the form of small holes. The space between the disc-shaped portion and the flow modifying portion may be filled or partially filled with silencing material.

The European patent specification No. 0 043 193 describes a butterfly valve having an attenuating plate provided in front of the butterfly valve disc on the pressure side of the valve, and a plurality of attenuating plates provided on the opposite side of the disc. All the plates are parallel with the plane of the circumferential sealing surface of the butterfly valve disc and fill substantially the entire space which has the shape of a sphere which is generated by the peripheral contour of the butterfly valve disc, more particularly its sealing surface, as the butterfly valve disc is rotated.

Further it is known through the US-patent No. 3,960,177 to provide attenuating means in the form of a row of teeth-like ribs which project parallel to the direction of the flow passage when the disc is in the closed position, adjacent to the periphery or outer rim of the disc, within a minor sector of the above mentioned spherical space.

Very good attenuation efficiency may be achieved if attenuating members are provided in the whole of the said spherical space, as according to the said EP-0 043 193. However, only restricted portions of the attenuating means are responsible for this achievement, while other portions contribute to a very small degree to the attenuation. This makes the whole device unnecessarily heavy and clumsy. Further, attenuating plates which are parallel with the plane of the sealing surface of the valve disc are not any ideal attenuating members. The attenuating device according to the US-patent No. 3,960,177, on the other hand, is light and may appear practical, but as a matter of fact it is troublesome to manufacture and gives a comparatively small attenuation effect.

### BRIEF DISCLOSURE OF THE INVENTION

It is a purpose of the present invention to provide an attenuating device in a butterfly valve which has a good sound attenuating capacity, which is not too heavy and clumsy, and which is comparatively easy to manufacture.

The invention is defined by what is stated in the appending claim 1. Further and other objectives may be achieved therein that the invention is characterized in what is stated in the appending dependent claims.

Further characteristic features and aspects of the invention will be apparent from the following description of a couple of conceivable embodiments.

### BRIEF DESCRIPTION OF DRAWINGS

In the following description of preferred embodiments reference will be made to the accompanying drawings, in which
- Fig. 1: is a plan-view of a first embodiment of the invention;
- Fig. 2: is a longitudinal sectional view along the line II-II in Fig. 1;
- Fig. 3: is a sectional view at right angle to the axis of rotation along a line III-III in Fig. 2;
- Fig. 4: is a plan-view of a second embodiment of the invention;
- Fig. 5: is a longitudinal sectional view of Fig. 4; and
- Fig. 6: is a sectional view at right angle to the axis of rotation along a line VI-VI in Fig. 5.

### DESCRIPTION OF PREFERRED EMBODIMENTS

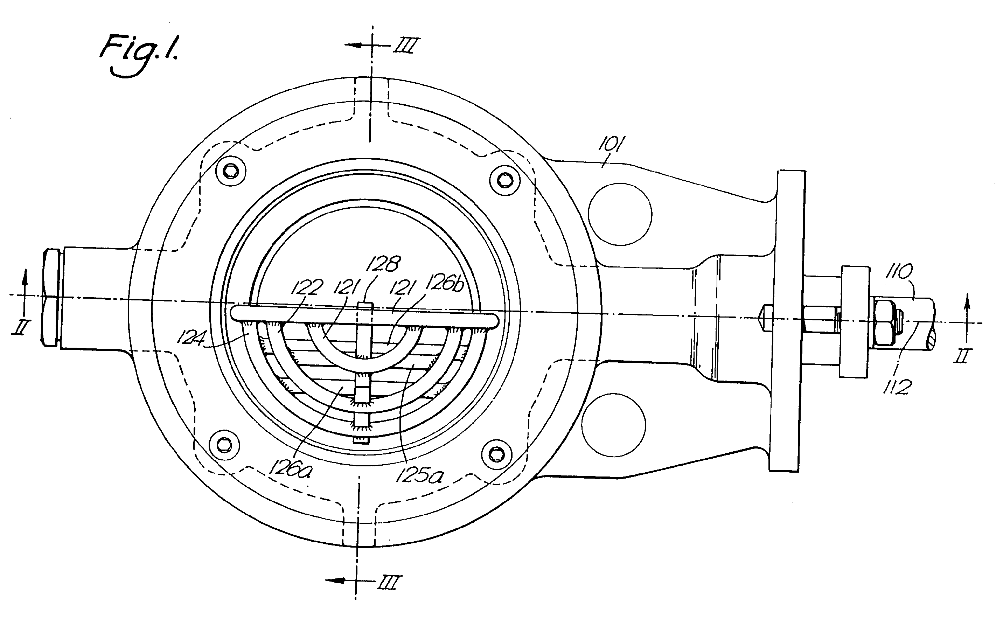

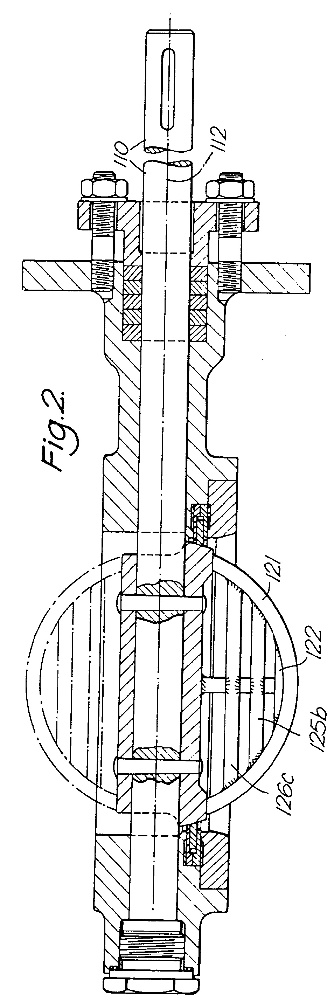

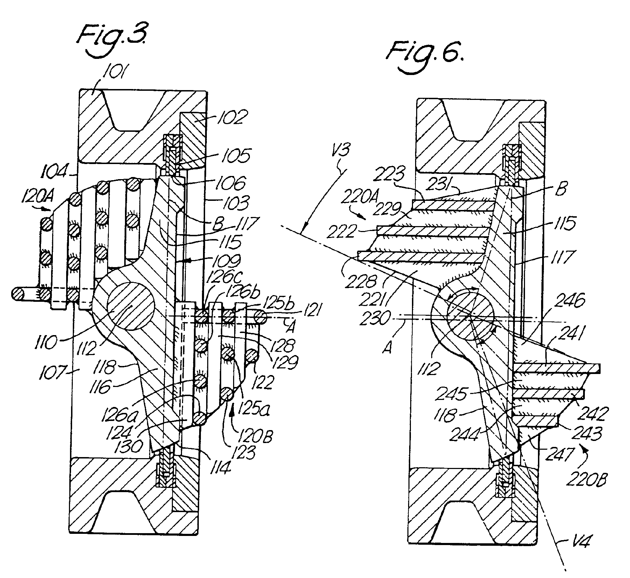

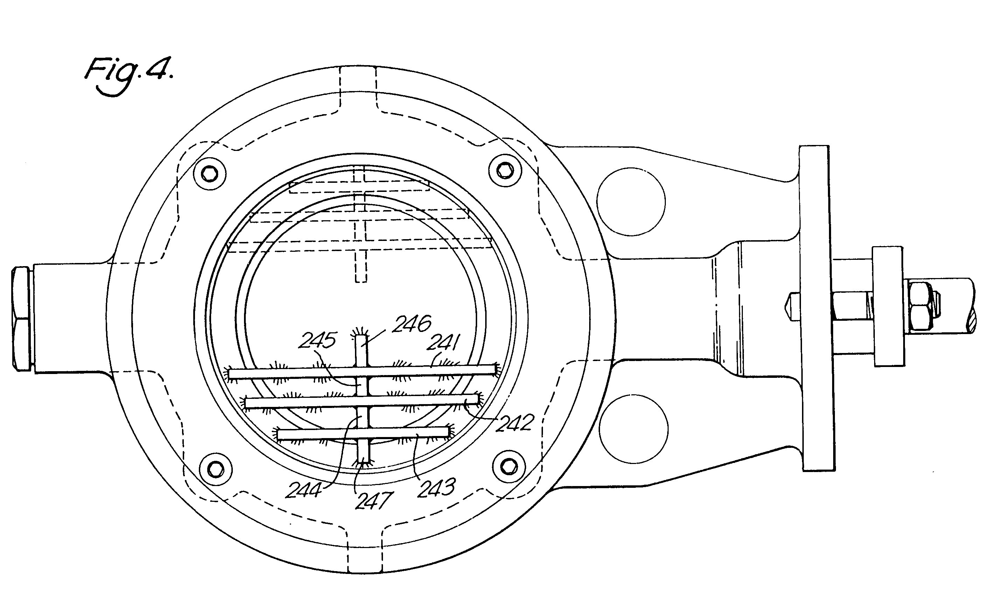

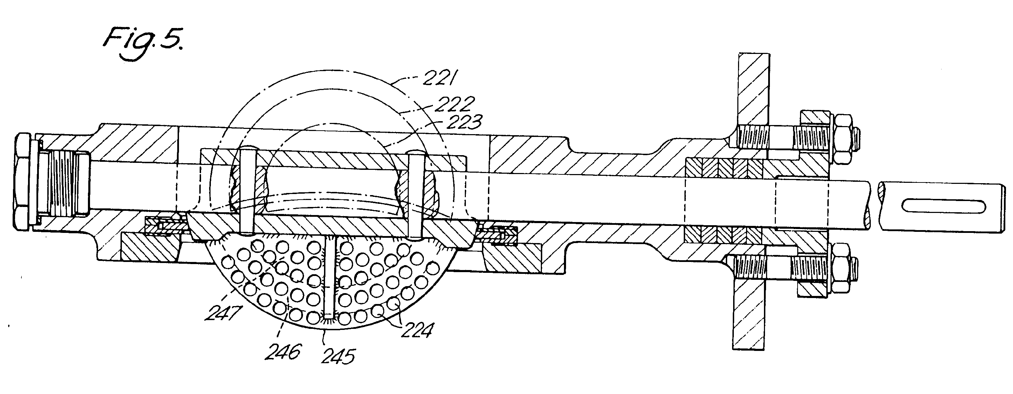

In Fig. 1-3 a valve housing has been generally designated 101, and a cover plate, which can be said to be a part of the valve housing, has been designated 102. The valve housing has an inlet opening 103 and an outlet opening 104. A seat ring 105 is provided between the main part of the valve housing and the cover plate 102, the inner edge of the seat ring exhibiting a sealing surface 107. A flow passage in the valve housing between the inlet opening 103 and the outlet opening 104 has been designated 107. In the valve housing there is provided a valve body which has the form of a butterfly valve disc 109 which is connected to a rotatable shaft 110. The axis of rotation of the rotatable shaft has been designated 112. The circumferential sealing surface 114 of the valve disc 109 is arranged to co-operate with the sealing surface 106 on the seat ring 105. In Fig. 1-3 the valve is shown with the disc 109 in its completely closing position. The valve may be opened by turning the valve disc 107 from the shown position 90° clockwise with reference to Fig. 3. During the opening movement the upper half 115 of the valve disc thus is turned in a direction towards the opening 103, in other words towards the pressure side, while the lower half 115 is turned towards the outlet opening 104, i.e. moving from the pressure side. That side of the closed disc which faces the inlet opening 103 is called front side 117 and that side which faces the outlet opening 104 consequently is called the rear side 118. The valve disc 109 and the seat ring 106 according to the embodiment are designed like corresponding devices shown in the Canadian patent No. 1,131,607 and they therefore do not constitute any part of the present invention per se.

The butterfly valve disc and the valve seat may also have other designs than the one that is described in this specification. The novel characteristic features of the invention reside in the design and the arrangement of those attenutating means on the valve disc 109 which have been designated 120A and 120B. The first attenuating means 120A is provided on the rear side 118 of the upper half 115 of the valve disc, which is turned towards the pressure side when the valve is being opened, while the second attenuating means 120B is provided on the front side 117 of that half 116 of the disc 109 which is turned from the pressure side as the valve is opened.

In Fig. 1-3, said second attenuating means 120B is shown in three different views and will now be described more in detail. A first attenuating member consisting of a steel rod which is bent to the shape of a circular arc has been designated 121. It is with its ends welded to the front side 117 of the valve disc 109 and lies in a plane A which is parallel with the axis of rotation 112 of the rotatable shaft and perpendicular to the plane B which is defined by the circumferential line of contact between the sealing surfaces 114 and 106 of the valve disc and the seat ring, respectively. Three additional attenuating rods which also are bent to the shape of circular arcs have been designated 122, 123, and 124. These three attenuating members, which have different radii as is shown in Fig. 1, are secured with there ends by welding to the first attenuating member 121 and are provided in three different planes which are perpendicular to the plane A of the rod 121 and parallel with the above mentioned contact plane B. In the plane of the attenuating member 123 there are also two further, straight attenuating members 125a, 125b, and in the plane of the attenuating member 124 there are three more, straight attenuating members 126a, 126b, and 126c. Between each of the planes of the attenuating members 122, 123, 124 and between the latter plane and the front side 117 of the valve disc, there is symmetrically provided a flat iron bar 128, 129, and 130, respectively. The straight attenuating members, which are referred to as first attenuating members in the appending claims, are secured by welding to the flat steel bars 128-130. The attenuating means 120B thus has the substantial form of a "half" basket formed by the bow-shaped second attenuating members 121-124, which "half" basket is sparsely filled by the straight first attenuating members 125a, 125b, and 126a-c, which are united with the second attenuating members and with the said flat steel bars to form a unit.

The first attenuating means 120A is in principle designed in the same way as the second attenuating means 120B, but this "half basket" which defines the contour of the attenuating means 120A, is somewhat deeper than the "half basket" of the second attenuating means 120B. Also the number of attenuating members in the basket is somewhat larger, but the distribution of the attenuating members is in principle the same. Thus, when the valve is open, the flow path of the fluid through the passage 107 is hindered by the two attenuating means 120A and 120B which co-operate such that they in combination form an integrated attenuating means in the valve.

The two attenuating means 120A and 120B together with adjacent parts of the valve disc and of the rotatable shaft have the substantial shape of a spherical wedge, which has its edge on the axis of rotation of the valve disc. The spherical wedge which is defined by the first attenuating means 120A, according to the embodiment has an edge angle of appr. 105° and has one of its semicircular side facing the rear side of the valve disc. The second attenuating means 120B on the front side of the valve disc together with an adjacent portion of the valve disc forms a spherical wedge having an edge angle of appr. 65°. Each of said first and second attenuating means 120A and 120B, respectively, contains sparsely distributed attenuating members as described above, within substantially the whole of that part of the spaces having the substantial form of a spherical wedge which is located in front of, and rear of, respectively, and facing said front side and rear side, respectively, of the valve disc.

By restricting the extension of the two attenuating means 120A and 120B to a space having the substantial shape of a spherical wedge with a certain, restricted wedge angle and by filling sparsely distributed attenuating members in that part of the wedge-shaped space which faces said attenuating means, there is achieved an efficient sound attenuation, at the same time as the device does not become too heavy and clumsy.

Preferably, the edge angle of the spherical wedge should be at least 30° and not more than 120°.

In the embodiment according to Fig. 4-6 the valve housing, the valve disc and the valve seat have the same design as according to the above described embodiment. These parts therefore will not be described once more, but instead it is referred to the above description as far as these details are concerned. As according to the first embodiment, a first attenuating means 220A is provided on the rear side 118 of the upper half 115 of the valve disc, while a second attenuating means 220B is provided on the front side 170 of that half 116 of the valve disc 109 which is turned from the pressure side as the valve is opened.

The first attenuating means 220A consists of three flat attenuating plates 221, 222, and 223 which are provided at right angle to the plane B. The plates 221-223 have the shape of circular segments, the circular radius of the plate 222 being smaller than that of plate 221, and the circular radius of plate 223 being smaller than that of plate 222. More particularly, the peripheries of the plates 221-223, which have the shapes of circular arcs, almost touch the sphere which is generated by the peripheral contour of the valve disc 108 when the disc is rotated about its axis of rotation. The plates 221-223 are perforated to form a large number of apertures 224. Between the plates 221 and 222 there is provided a space member in the form of a flat steel bar 228. Between the plates 222 and 223 is a corresponding space member 229 and at the sides of the attenuating plates 221 and 223 there are provided two supporting flat steel bars 230 and 231, respectively.

In a corresponding way, the second attenuating means 220B consists of three perforated plates 241, 242, 243 which are shaped as circular segments having intermediate space members 244, 245 and lateral support members 246, 247 as is shown in the drawings, the second attenuating means 220B having a design which is analogous with that of the first attenuating means 220A.

As according to the embodiment which was described with reference to Fig. 1-3, also the two attenuating means 220A and 220B form a body which is sparsely filled with attenuating members, said body constituting the dominating part of a volume having the shape of a spherical wedge with the edge on the axis of rotation 112 of the valve disc. According to the embodiment, the spherical wedges have the edge angles V3=appr. 80° (in the first attenuating means 220A), and V4=47°, respectively (in the second attenuating means 220B). It should be noted that these angles V3 and V4 may be increased by providing any additional attenuating plate between the centre of the valve disc and the attenuating plates 221, and 241, respectively.

## Claims

1. Device in a butterfly valve comprising a valve housing (101) with an inlet (103) on the pressure side of the valve, an outlet (104), and a flow passage (107) therebetween, a valve body with a rotatable closure member in the form of a butterfly valve disc (109) with a front side facing the pressure side of the valve and a rear side turned from the pressure side in the closed position of the valve disc, a valve seat (105) in the valve housing, a rotatable shaft (110) for turning the butterfly valve disc about an axis of rotation (112) between an open position, in which the butterfly valve disc does not close the flow passage between the inlet and the outlet, and a closed position, in which the butterfly valve disc is blocking all flow through said passage by sealing contact in a plane (B) between a circumferential sealing surface (114) on the butterfly valve disc and a sealing surface (106) on the valve seat, said device comprising attenuating means (120A, 120B) provided on the butterfly valve disc within that space having the shape of a part of a sphere which is generated by the contour of butterfly valve disc when the butterfly valve disc is turned about the axis of rotation by the rotatable shaft,
said attenuating means comprising
a first attenuating means (120A) provided on the rear side of the butterfly valve disc but essentially only on that half of the disc which its turned towards the pressure side as the valve is being opened from the closed position, defining a first space having the substantial shape of a spherical wedge, or a part of a spherical wedge, said wedge having its edge on the axis of rotation of the butterfly valve disc and having an edge angle which is at least 30° but not more than 120°;
and a second attenuating means (120B) provided on the front side (117) of the butterfly valve disc but essentially only on that half of the disc which is turned from the pressure side as the valve is being opened from the closed position, defining a second space which also has the substantial shape of a spherical wedge or part of a spherical wedge having its edge on the axis of rotation of the butterfly valve disc and having an edge angle which is at least 30° but not more than 120°;
**characterized in**
that each of said first and second attenuating means comprises sparsely distributed attenuating rods or perforated plates within substantially the whole of that part of the said first and second spaces having the substantial shape of a spherical wedge or part of a spherical wedge which is located in rear of and front of, respectively, and is adjacent to the rear side and to the front side of the butterfly valve disc, respectively, said perforated plates extending from the rear side, and from the front side, respectively, of the valve disc.

2. Device according to claim 1 **characterised** in that the rotatable shaft (110) is excentrically provided relative to the seat plane (B), the rotatable shaft (110) is provided on that side of the said seat plane (B) which corresponds to the rear side of the valve disc, that said edge angle of the first attenuating means, which is provided on the rear side of the valve disc, is at least 70°, and that the edge angle of the second attenuating means, which is provided on the front side of the valve disc, is not more than 90°.

3. Device according to claim 1 or 2, **characterized** in that the attenuating means consists of a plurality of rods which sparsely fill that part of said respective space having the substantial shape of a spherical edge or part of a spherical edge which is located in front of, and rear of, respectively, and is adjacent to the front side, and the rear side, respectively, of the valve disc.

4. Device according to claim 3, **characterized** in that said attenuating means consists on one hand of rods which are bent to the shape of circular arcs and which define the peripheral contour of the attenuating means and form a structure having the substantial shape of a half basket, and the other hand of attenuating rods provided in a direction which is parallel with the axis of rotation of the valve disc and which sparsely fill said half basket.

5. Device according to any of claims 1 and 2 **characterized** in that the plates are provided essentially at right angles to the seat plane (B) when the valve is closed, and that they are parallel with the axis of rotation of the valve disc.

6. Device according to claim 5, **characterized** in that the attenuating plates have the shape of circular segments.

## Patentansprüche

1. Vorrichtung in einem Klappenventil, umfassend ein Ventilgehäuse (101) mit einem Einlass (103) an der Druckseite des Ventils, einem Auslass (104) und einem Strömungsmitteldurchlass (107) dazwischen, einen Ventilkörper mit einem drehbaren Verschlussglied in Form einer Klappenventilscheibe (109) mit einer Vorderseite, die der Druckseite des Ventils zugekehrt ist, und einer Rückseite, die der Druckseite in geschlossener Stellung der Ventilscheibe abgekehrt ist, einen Ventilsitz (105) im Ventilgehäuse, eine drehbare Welle (110) zum Drehen der Klappenventilscheibe um eine Rotationsachse (112) herum zwischen einer offenen Stellung, in der die Klappenventilscheibe den Strömungsmitteldurchfluss zwischen dem Einlass und Auslass nicht verschliesst, und einer geschlossenen Stellung, in der die Klappenventilscheibe den gesamten Strömungsfluss durch den Durchlass hindurch blockiert, durch einen abdichtenden Kontakt in einer Ebene (B) zwischen einer umfangsmässigen Dichtungsfläche (114) auf der Klappenventilscheibe und einer Dichtungsfläche (106) am Ventilsitz, wobei die Vorrichtung folgendes umfasst: Dämpfungsmittel (120A,120B), die an der Klappenventilscheibe innerhalb des Raumes vorgesehen sind, der die Form eines sphärischen Teils besitzt, der durch die Kontur der Klappenventilscheibe erzeugt wird, wenn dieselbe durch die drehbare Welle um die Rotationsachse herum gedreht wird, wobei die genannten Dämpfungsmittel ein erstes Dämpfungsmittel (120A) umfassen, das auf der Rückseite der Klappenventilscheibe, jedoch im wesentlichen nur auf derjenigen Hälfte der Scheibe vorgesehen ist, die in Richtung auf die Druckseite zugekehrt ist, während das Ventil aus seiner geschlossenen Stellung heraus geöffnet wird, wobei ein erster Raum entsteht, der im wesentlichen die Form eines sphärischen Keils oder eines Teiles eines sphärischen Keils besitzt, wobei die Kante des Keils an der Rotationsachse der Klappenventilscheibe sitzt und einen Kantenwinkel besitzt, der mindestens 30° und nicht mehr als 120° beträgt, sowie ein zweites Dämpfungsmittel (120B), das auf der Vorderseite (117) der Klappenventilscheibe vorgesehen ist, jedoch im wesentlichen nur auf derjenigen Hälfte der Scheibe, die von der Druckseite abgekehrt ist, während das Ventil aus seiner geschlossenen Stellung heraus geöffnet wird, wobei ein zweiter Raum entsteht, der ebenfalls im wesentlichen die Form eines sphärischen Keils oder eines Teils eines sphärischen Keils besitzt, wobei die Kante des Keils an der Rotationsachse der Klappenventilscheibe sitzt und einen Kantenwinkel besitzt, der mindestens 30° und nicht mehr als 120° beträgt,
dadurch gekennzeichnet, daß jedes erste und zweite Dämpfungsmittel spärlich verteilte Dämpfungsstangen oder perforierte Platten umfasst, und zwar im wesentlichen innerhalb desjenigen gesamten Teils der genannten ersten und zweiten Räume, die die wesentliche Form eines sphärischen Keils oder eines Teiles eines sphärischen Keils aufweisen, der an der hinteren bzw. vorderen Seite und angrenzend an die hintere bzw. vordere Seite der Klappenventilscheibe angeordnet ist, und daß sich die perforierten Platten von der Hinter- bzw. Vorderseite der Ventilscheibe erstrecken.

2. Vorrichtung nach Anspruch 1, dadurch gekennzeichnet, daß die drehbare Welle (110) exzentrisch relativ zur Sitzebene (B) vorgesehen ist, und daß die drehbare Welle (110) auf der Seite der Sitzebene (B) vorgesehen ist, die der hinteren Seite der Ventilscheibe entspricht, wobei der Kantenwinkel des ersten Dämpfungsmittels, das auf der Hinterseite der Ventilscheibe vorgesehen ist, mindestens 70° beträgt, und daß der Kantenwinkel des zweiten Dämpfungsmittels, das auf der Vorderseite der Ventilscheibe vorgesehen ist, nicht mehr als 90° beträgt.

3. Vorrichtung nach Anspruch 1 oder 2, dadurch gekennzeichnet, daß das Dämpfungsmittel aus einer Vielzahl von Stangen besteht, die spärlich denjenigen Teil des entsprechenden Raumes füllen, der im wesentlichen die Form einer sphärischen Kante oder eines Teils einer sphärischen Kante besitzt, der vor bzw. hinter und angrenzend an die Vorder- bzw. Rückseite der Ventilscheibe angeordnet ist.

4. Vorrichtung nach Anspruch 3, dadurch gekennzeichnet, daß das Dämpfungsmittel einerseits aus Stangen besteht, die zur Form von Kreisbögen abgebogen sind, die die umfangsmässige Kontur des Dämpfungsmittels ausbilden und einen Aufbau formen, der im wesentlichen die Form eines halben Korbes besitzt, und andererseits aus Dämpfungsstangen besteht, die in einer Richtung vorgesehen sind, die parallel zur Rotationsachse der Ventilscheibe verläuft, und die spärlich den halben Korb füllen.

5. Vorrichtung nach irgendeinem der Ansprüche 1 und 2, dadurch gekennzeichnet, daß die Platten im wesentlichen in rechten Winkeln zur Sitzebene (B) vorgesehen sind, wenn das Ventil geschlossen ist, und daß sie parallel zur Rotationsachse der Ventilscheibe verlaufen.

6. Vorrichtung nach Anspruch 5, dadurch gekennzeichnet, daß die Dämpfungsplatten die Form kreisförmiger Segmente besitzen.

## Revendications

1. Dispositif pour vanne papillon comprenant un logement de vanne (101) avec une entrée (103) du côté de pression de la vanne, une sortie (104), et un passage d'écoulement (107) reliant l'entrée et la sortie, un corps de vanne comportant un organe de fermeture tournant ayant la forme d'un disque (109) de vanne papillon avec une face avant regardant le côté de pression de la vanne et une face arrière qui est à l'opposé du côté de pression dans la position de fermeture du disque de vanne, un siège de vanne (105) dans le logement de vanne, un arbre tournant (110) servant à faire tourner le disque de vanne papillon autour d'un axe de rotation (112) entre une position d'ouverture, dans laquelle le disque de vanne papillon ne ferme pas le passage d'écoulement reliant l'entrée et la sortie, et une position de fermeture dans laquelle le disque de vanne papillon bloque tout écoulement à travers le dit passage par un contact étanche dans un plan (B) entre une surface d'étanchéité circonférentielle (114) du disque de vanne papillon et une surface d'étanchéité (106) du siège de vanne, le dit dispositif comprenant un dispositif d'atténuation (120A, 120B) prévu sur le disque de vanne papillon à l'intérieur de l'espace en forme de partie de sphère qui est engendré par le contour du disque de vanne papillon quand le disque de vanne papillon est entraîné en rotation par l'arbre tournant autour de l'axe de rotation, le dit dispositif d'atténuation comprenant un premier moyen d'atténuation (120A) prévu sur la face arrière du disque de vanne papillon mais seulement pour l'essentiel sur la moitié du disque tournée vers le côté de pression lorsqu'on ouvre la vanne à partir de sa position de fermeture, en déterminant un premier espace ayant pratiquement la forme d'un coin sphérique, ou d'une partie d'un coin sphérique, le dit coin ayant son bord sur l'axe de rotation du disque de vanne papillon et ayant un angle de bord d'au moins 30° mais pas supérieur à 120° ;
et un second moyen d'atténuation (120B) prévu sur la face avant (117) du disque de vanne papillon mais seulement pour l'essentiel sur la moitié du disque qui tourne à partir du côté de pression lorsqu'on ouvre la vanne à partir de la position de fermeture, en déterminant un second espace qui a aussi pratiquement la forme d'un coin sphérique ou d'une partie d'un coin sphérique, ayant son bord sur l'axe de rotation du disque de vanne de papillon et ayant un angle de bord qui est d'au moins 30° mais pas supérieur à 120° ;
caractérisé en ce que chacun des dits premier et second moyens d'atténuation comprend des tiges ou des plaques perforées d'atténuation disposées de façon clairsemée à l'intérieur de pratiquement toute la partie des dits premier et second espaces ayant pratiquement la forme d'un coin sphérique ou d'une partie d'un coin sphérique qui est disposée respectivement en arrière et en avant du disque de vanne papillon et qui est adjacente respectivement à la face arrière et à la face avant du disque de vanne papillon, les dites plaques perforées s'étendant respectivement depuis la face arrière et la face avant.

2. Dispositif selon la revendication 1, caractérisé en ce que l'arbre tournant (110) est disposé de façon excentrique par rapport au plan du siège (B), en ce que l'arbre tournant (110) est prévu sur le côté du dit plan du siège (B) qui correspond à la face arrière du disque de vanne, en ce que ledit angle de bord du premier moyen d'atténuation, prévu sur la face arrière du disque de vanne, est au moins de 70°, et en ce que l'angle de bord du second moyen d'atténuation, qui est prévu sur la face avant du disque de vanne, n'est pas supérieur à 90°.

3. Dispositif selon la revendication 1 ou 2, caractérisé en ce que le dispositif d'atténuation est constitué de plusieurs tiges remplissant de façon clairsemée la partie du dit espace respectif ayant sensiblement la forme d'un bord sphérique ou d'une partie d'un bord sphérique et qui est disposée respectivement en avant et en arrière du disque de vanne et qui est adjacente respectivement à la face avant et à la face arrière du disque de vanne.

4. Dispositif selon la revendication 3, caractérisé en ce que le dit dispositif d'atténuation est constitué d'une part de tiges courbées en forme d'arcs de cercle, qui déterminent le contour périphérique du dispositif d'atténuation et forment une structure ayant sensiblement la forme d'un demi panier, et d'autre part de tiges d'atténuation prévues dans une direction parallèle à l'axe de rotation du disque de vanne et qui remplissent de façon clairsemée le dit demi panier.

5. Dispositif selon l'une quelconque des revendications 1 et 2, caractérisé en ce que les plaques sont prévues essentiellement à angle droit du plan du siège (B) lorsque la vanne est fermée, et en ce qu'elles sont parallèles à l'axe de rotation du disque de vanne.

6. Dispositif selon la revendication 5, caractérisé en ce que les plaques d'atténuation sont en forme de segments circulaires.
